# EUROPEAN PATENT APPLICATION

(11) **EP 2 213 477 A1**
(43) Date of publication of application: **04.08.2010**
(21) Application number: 10151563.3
(22) Date of filing: 25.01.2010
(51) Int. Cl.: B60C 1/00, C08K 3/36, C08K 5/548, C08K 9/06

(54) **Rubber composition and tire**

(30) Priority: 29.01.2009 US 148217 P; 25.11.2009 US 625713
(71) Applicant: The Goodyear Tire & Rubber Company, Akron, OH 44316-0001 (US)
(72) Inventor: Hua, Kuo-Chih, Richfield, OH 44286 (US); Zhang, Ping, Hudson, OH 44236 (US)
(74) Representative: Kutsch, Bernd

(57) **Abstract**

The invention relates to a rubber composition and a tire having at least one component of this rubber composition comprising at least one conjugated diene-based elastomer which contains silica reinforcement together with use of a combination of coupling agents for the silica. The coupling agent combination comprises blocked alkoxyorganomercaptosilane and unblocked alkoxyorganomercaptosilane coupling agents. The tire component may be, for example, a tire tread.

## Description

### Field of the Invention

The invention relates to a rubber composition and a tire having at least one component of this rubber composition comprising at least one conjugated diene-based elastomer which contains silica reinforcement together with use of a combination of coupling agents for the silica. The coupling agent combination comprises blocked alkoxyorganomercaptosilane and unblocked alkoxyorganomercaptosilane coupling agents. The tire component may be, for example, a tire tread.

### Background of the Invention

Tires may have a component comprising a silica reinforced rubber composition which contains a silica coupling agent. Such tire component may be, for example, a tire tread.

Significant challenges may be presented for use of coupling agents for a silica-containing tire rubber composition, particularly relating to providing suitable uncured rubber processing viscosities (Mooney viscosities) and to providing abrasion resistance for cured rubber compositions.

Such challenges may particularly include, for example, providing suitable rubber processing at a relatively high rubber processing temperature.

In practice, coupling agents for the silica, particularly precipitated silica, in a diene-based rubber composition typically contain a moiety, for example, an alkoxy moiety, reactive with hydroxyl groups (for example silanol groups) on the silica and another different moiety (for example a sulfur providing moiety) interactive with diene-based elastomer(s) of the rubber composition to promote coupling of the silica to the elastomer.

Such individual coupling agents may include, for example, bis(3-triethoxysilylalkyl) polysulfides, alkoxyorganomercaptosilanes, and blocked alkoxyorganomercaptosilanes (having their mercapto moiety reversibly blocked).

In practice, the alkoxy moiety of such coupling agents typically readily reacts with hydroxyl groups on the silica during the mixing of the silica (for example precipitated silica) with a diene-based rubber in a rubber composition.

The sulfur moiety of such coupling agents typically interacts with, for example, carbon-to-carbon double bonds of a conjugated diene-based elastomer in the rubber composition to complete the silica-to-elastomer coupling effect.

For the processing of the rubber composition itself, a series of mixing steps is normally employed which typically includes at least one relatively high temperature, high shear, preparatory (sometimes referred to as non-productive) mixing step followed by a final relatively lower temperature mixing step (sometimes referred to as a productive mixing step) in which curatives are added, which is conducted at a significantly lower temperature than the aforesaid non-productive mixing step(s) to prevent or retard any significant pre-curing of the rubber during its mixing in the productive mixing step.

The aforesaid alkoxy moiety reaction of such coupling agent with the silica typically proceeds without significantly increasing the viscosity of the uncured rubber composition.

However, the interaction of the sulfur moiety of such coupling agent with diene-based elastomers of a rubber composition may significantly increase the viscosity of the uncured rubber composition to an extent that a reduced mixing temperature of less than 160°C is necessary which may, in turn, require a series of rubber mixing steps to silanize the silica and provide a suitable abrasion resistance to an ultimately sulfur cured rubber composition.

For example, use of a coupling agent comprising an alkoxyorganomercapto-silane for silica reinforcement (for example precipitated silica) in a conjugated diene-based elastomer-containing rubber composition can promote abrasion resistance for the sulfur cured rubber composition.

However, mixing of such coupling agent with the uncured silica reinforcement-containing rubber composition at a relatively high temperature (for example at least 160°C) may typically result in an unwanted significantly increased viscosity (increased Mooney viscosity) in a non-productive mixing of the uncured rubber composition. In order to decrease the unwanted viscosity build-up of the rubber composition during such rubber composition mixing, the coupling agent might be mixed, for example, with the rubber composition at a significantly lower temperature (for example below 150°C) which results in an undesirable increase in mixing time, and therefore an undesirable reduction in production mixing efficiency, for the rubber composition.

While the mechanism might not be fully understood, it is believed that in the case of polysulfide silane coupling agents, the sulfur-to-sulfur linkage of the coupling agent tends to break during the high temperature mixing stage to thereby yield free, liberated, sulfur which thereby becomes available in the mixing of the rubber composition to cause a degree of premature curing and result in an undesirable increased mixing viscosity.

Use of an alkoxyorganomercaptosilane coupler typically and undesirably significantly increases the viscosity of the rubber composition by exposure of the sulfur of its mercapto moiety to diene-based elastomer(s) of the rubber composition during a high temperature mixing of the rubber composition.

In this manner, use of alkoxyorganomercaptosilanes, in general, is seen herein to make such silica coupling agents largely impractical for use in mixing with diene-based elastomers at high rubber mixing temperatures (for example at least 160°C). Accordingly a significantly lower rubber mixing temperature mixing might be undertaken in a range of, for example, 120°C to 145°C in order to prevent or retard premature curing (crosslinking) of the rubber with a resultant unwanted viscosity buildup in the rubber mixer. Such lower rubber mixing temperature could significantly reduce the efficiency of the rubber mixing operation in a sense of taking longer to mix the rubber composition.

Further, it is considered herein that use of such low mixing temperature for the rubber would likely result in reduced silanization of the precipitated silica by the alkoxy group on the silica coupling agent to thereby cause porosity in the mixed rubber upon extruding it to form a shaped rubber article.

To overcome such difficulties for the alkoxyorganomercaptosilane coupling agents, and to enhance the mixing productivity and efficiency by resisting a significant increase in viscosity of the uncured rubber composition, US-A- 7,074,876 proposes the use of blocked silane coupling agents in silica rubber compositions. The use of such blocked coupling agent was seen to make it feasible to mix the silica rubber composition at relatively higher temperatures (for example from 170°C to 180°C) without rubber composition compound scorching (for example pre-sulfur curing) and with much improved rubber processibility in a sense of not developing excessively increased rubber viscosity. The use of such silane coupling agents hence significantly enhances the mixing productivity and efficiency of silica rubber composition. However, in contrast to use of an alkoxyorganomercaptosilane based coupling agent, it has been observed that use of a blocked alkoxyorganomercaptosilane coupling agent led to sulfur cured silica rubber compositions with reduced abrasion resistance.

Accordingly, it remains desirable to further enhance abrasion resistance of a sulfur cured rubber composition (for example reduction in treadwear for a tire tread) in which a blocked alkoxyorganomercaptosilane coupling agent is used for the uncured rubber composition without unnecessarily compromising processibility (e.g. unnecessarily increasing viscosity) of the uncured rubber composition.

Accordingly, the aforesaid problems remain for using a coupling agent for a silica (for example precipitated silica) and diene-based elastomer-containing rubber composition for a tire component (for example a tire tread) or another rubber article where it is desired to mix the uncured rubber composition at a relatively high temperature.

For this invention, it was unexpectedly found that use of a combination of the blocked alkoxyorganomercaptosilane coupling agent (having its mercapto moiety reversibly blocked) together with an unblocked alkoxyorganomercaptosilane can both promote abrasion resistance for a sulfur cured precipitated silica reinforced diene elastomer based rubber composition and make it possible to prepare an uncured rubber composition at high mixing temperatures without significantly compromising (e.g. without significantly increasing) the viscosity of the rubber composition during the mixing operation.

While the use of two bis(3-triethoxysilylpropyl) polysulfides have heretofore been suggested (see for example US-A- 6,384,127), or a combination of an alkoxyorganomercaptosilane with an alkyl alkoxysilane suggested (see for example US-A- 6,433,065), this invention is a significant departure from such teachings.

For this invention, it has been discovered that a selective combination of blocked and unblocked alkoxyorganomercaptosilane coupling agents can be suitably used in a high temperature mixing process for a rubber composition which contains a combination of silica reinforcement and diene-based elastomer.

For this invention, it was found that abrasion resistance for the silica-rich diene-based elastomer-containing rubber composition is promoted through an innovative and optimal usage of two silane coupling agents with different, but unique characteristics.

More specifically, it has been observed, in a silica-rich rubber composition, that a coupling agent combination comprising a reactive silane coupling agent comprising a siloxyorganomercaptosilane (therefore without having its mercapto moiety being reversibly blocked), together with a siloxyorganomercaptosilane having its mercapto moiety reversibly blocked, can provide good rubber processibility and promote enhanced abrasion resistance and rebound property (e.g. lower hysteresis to promote lower rolling resistance for a tire with a tread of such rubber composition) and, further, while processing (e.g. mixing) the uncured silica-containing rubber composition at an elevated temperature of at least 160°C in a non-productive mixing stage, thereby without compromising the higher temperature rubber processing advantage of using a blocked siloxyorganomercaptosilane coupling agent alone.

It has also been found that aforesaid enhancement of the cured rubber composition (for example its sulfur cured abrasion resistance) could be achieved without increasing the total loading (increasing the total combined amounts) of the individual coupling agents.

Accordingly, a significant novel aspect of this invention is seen herein that a coupling agent comprising a siloxyorganomercaptosilane can be added into the mixer together with an alkoxyorganomercaptosilane having its mercapto moiety preferably reversibly blocked wherein the rubber composition is mixed at a relatively high mixing temperature (for example at least 160°C) without causing significant premature curing of the rubber composition (sometimes referred to as "compound scorch") and without excessive rubber viscosity buildup and therefore without an associated uncured rubber processing difficulty and, also, for processing (for example extruding) the mixed rubber composition after it is removed from the rubber mixer.

This is in significant contrast to using the coupling agent comprising the siloxyorganomercaptosilane alone at the higher rubber mixing temperature (for example at least 160°C). This was a feature that is considered herein to be a discovery that the higher mixing temperature could successively be used which was not considered as being ascertainable without experimentation, particularly since it was not known whether one or more of the coupling agents would have an adverse dominant effect on the rubber composition viscosity during the mixing step.

Another novel feature of the invention is that it was found that the usage at the relatively high rubber mixing temperature (for example at least 160°C) of the combination of blocked alkoxyorganomercaptosilane coupling agent together with the siloxyorganomercaptosilane coupling agent resulted in an ultimately sulfur cured silica-rich rubber composition with enhanced abrasion resistance and improved hysteretic properties (e.g. reduced internal heat generation of the sulfur cured rubber composition during dynamic use). In contrast, simply increasing the loading of the siloxyorganomercaptosilane having its mercapto moiety reversibly blocked during the high temperature mixing step, when used alone, was observed to result in silica-rich rubber compositions without a significant improvement, and perhaps even a deterioration or reduction in abrasion resistance of the sulfur cured rubber composition.

A further novel feature of the invention is that it was found that the enhancement of the aforesaid abrasion resistance of the sulfur cured silica-rich rubber composition through the use of a combination of the alkoxyorganomercaptosilane with the blocked alkoxyorganomercaptosilane coupling agent was observed to not be at an expense of the processibility (for example without a significant increase of rubber viscosity) of the uncured rubber composition at a higher mixing temperature (for example at least 160°C). This was a feature that is considered herein to be a discovery that the higher mixing temperature could successively be used which was not considered as being ascertainable without experimentation, particularly since it was not known whether one or more of the coupling agents would have an adverse dominant effect.

In the description of this invention, terms such as "compounded rubber", "rubber compound" and "compound", if used herein, refer to rubber compositions composed of one or more elastomers blended with various ingredients, including curatives such as sulfur and cure accelerators. The terms "elastomer" and "rubber" might be used herein interchangeably. The term "phr", where used, refers to parts by weight per 100 parts by weight rubber. The term phs, where used, refers to parts by weight per 100 parts by weight silica filler.

### Summary and Practice of the Invention

The invention relates to a rubber composition of claim 1 to a tire according to claim 12 and to a method according to claim 14.

Dependent claims refer to preferred embodiments of the invention.

In accordance with a preferred aspect of this invention, a tire is provided having at least one component comprising a rubber composition comprising, based upon parts by weight per 100 parts by weight rubber (phr):
(A) elastomers comprising:
   (1) at least one non-functionalized conjugated diene-based elastomer, or
   (2) conjugated diene-based elastomers comprising
      (a) from 0 to 55, alternately from 15 to 55, phr of at least one non-functionalized conjugated diene-based elastomer, and
      (b) 45 to 100, alternately from 45 to 85, phr of at least one elastomeric functionalized styrene/butadiene copolymer rubber (preferably having a Tg, for example, in a range of from -10°C to -70°C) comprising at least one of:
         (i) styrene/butadiene copolymer elastomers (SBR) having a bound styrene in a range of from 20 to 45 percent containing alkoxy silane groups (e.g. -Si-(OR)n groups); (said alkoxy groups being reactive with hydroxyl groups contained on the silica reinforcing filler),
         (ii) styrene/butadiene copolymer elastomers having a bound styrene content in a range of from 20 to 45 percent and containing amino-alkoxy silane groups with said amino-alkoxy silane groups connected to the elastomer through the silicon atom (e.g. R"-(NHₓ-R')ₘ-Si-(OR)ₙ groups where R' is an alkylene group of from 1 to 12 carbon atoms, R" is an alkyl group of from 0 to 10 carbon atoms and R is an alkyl group containing from 1 to 20 carbon atoms wherein at least one of said R groups is preferably an ethyl group, m is a value of 1 or 2, n is a value of 1 or 2 and x is a value ranging from 0 to 2); (said alkoxy silane groups being reactive with hydroxyl groups contained on the silica reinforcing filler),
         (iii) styrene/butadiene copolymer elastomer containing an amine functional group (amine functionalized SBR); (said amine functional group being reactive with hydroxyl groups contained on precipitated silica reinforcing filler);
         (iv) styrene/butadiene copolymer elastomers having a bound styrene content in a range of from 20 to 45 percent and containing silane-sulfide end groups with said silane-sulfide groups connected to the elastomer through the silicon atom (e.g. (RO)ₓ-R_{y}-Si-R'-S) groups, where x ranges from 1, 2 and 3, y ranges from 0, 1 and 2, R is the same or different alkylene group having from 1 to 16 carbon atoms and R' is an alkyl, aryl or alkylaryl group with from 1 to 15 carbon atoms);
         (v) styrene/butadiene copolymer elastomer having hydroxyl functional groups (hydroxyl functionalized SBR); (said hydroxyl groups being reactive with hydroxyl groups on precipitated silica; and
         (vi) styrene/butadiene copolymer elastomer having epoxy groups (epoxy functionalized SBR); (said epoxy groups being reactive with hydroxyl groups on the silica);
(B) 30 to 120 phr of a reinforcing filler comprising:
   (1) silica such as amorphous synthetic silica, preferably precipitated silica, which contains hydroxyl groups (e.g. silanol groups) on its surface, or
   (2) a combination of rubber reinforcing carbon black and said silica comprising from 40 to 110 phr of said silica (with the remainder of said reinforcing filler, therefore, being said rubber reinforcing carbon black);
(C) a combination of silica coupling agents comprising:
   (1) alkoxyorganomercaptosilane, and
   (2) blocked alkoxyorganomercaptosilane (i.e. having its mercapto moiety reversibly blocked),
wherein the ratio (i.e. the weight ratio) of the alkoxyorganomercaptosilane to the blocked alkoxyorganomercaptosilane is in a range of from 0.1/1 to 0.5/1, alternately from 0.15/1 to 0.45/1.

In one embodiment, the elastomer is at least one non-functionalized conjugated diene-based elastomer comprising at least one polymer of at least one of isoprene and 1,3-polybutadiene and terpolymer of styrene and at least one of isoprene and 1,3-butadiene.

In one embodiment, the elastomer is a combination of non-functionalized conjugated diene-based elastomer and the functionalized elastomer, wherein said non functionalized conjugated diene-based elastomer comprises at least one polymer of at least one of isoprene and 1,3-polybutadiene and terpolymer of styrene and at least one of isoprene and 1,3-butadiene.

In one embodiment, the elastomer is a combination of non-functional conjugated diene-based elastomer and the functionalized elastomer, wherein the non-functionalized conjugated diene-based elastomer comprises:
(A) cis 1,4-polybutadiene rubber, or
(B) cis 1,4-polybutadiene rubber and cis 1,4-polyisoprene rubber.

Preparation and use of various blocked mercaptoalkoxysilanes may be found, for example, in PCT/US98/17391 and US-A- 3,692,812 as well as in various literature publications such as, for example, in Gornowicz, G., "Preparation of Silylalkanethiols", J. Org. Chem., Volume 33, No. 7, July, 1968; Vorkonov, M. G., et al., Trialkoxysilylalkanethiols and Bis(trialkoxysilylakyl)sulfides, Izvestiya Akademii Nauk SSSR and Seriya Khimicheskeya, No. 8, Pages 1849 through 1851, August 1977.

In practice, the blocked alkoxyorganomercaptosilane, the mercapto group, or moiety, initially is non-reactive with the diene-based elastomer because of the blocking group. The blocking group substantially prevents the mercapto group of the mercaptoalkoxysilane from prematurely coupling to the diene-based elastomer(s) during the mixing of the rubber composition. Thus, in practice, a substantial coupling of the silica with the diene-based elastomer(s) is avoided until later in the rubber processing and possibly delayed until the actual curing of the rubber composition at the elevated temperature, thereby minimizing the undesirable premature curing (scorch) and the associated undesirable increase in viscosity of the rubber composition itself during the mixing stage and possibly subsequent processing stage(s), such as for example processing of the mixed rubber composition to form shaped, uncured rubber compositions such as tire treads and other tire components.

It is therefore to be appreciated that an unblocking agent (deblocking agent) is used to unblock the alkoxyorganomercaptosilane as a material capable of unblocking the blocked mercaptoalkoxysilane to enable the mercapto group, or moiety, of the mercaptoalkoxysilane to interact with the diene based elastomer(s). It is to be appreciated that choice of the unblocking agent will depend upon the blocking group, or moiety, used to block the chemical activity of the mercaptoalkoxysilane itself insofar as interacting with a diene-based elastomer is concerned, which would be readily understood by one having skill in such art.

When reaction of the mercapto group of the alkoxyorganomercaptosilane is desired to couple the silica to the diene-based elastomer, the deblocking agent (unblocking agent) is added to the mixture to deblock the blocked mercaptosilane. The unblocking agent is added to facilitate the reactivity of the mercapto group. An exemplary amount of the unblocking agent may be, for example, 0.1 to 5 phr; more preferably in the range of from 0.5 to 3 phr.

In practice, the unblocking agent may be a nucleophile containing a hydrogen atom sufficiently labile such that hydrogen atom could be transferred to the site of the original blocking group to form the alkoxyorganomercaptosilane. Thus, with a blocking group acceptor molecule, an exchange of hydrogen from the nucleophile would occur with the blocking group of the blocked alkoxyorganomercaptosilane to form the unblocked alkoxyorganomercaptosilane and the corresponding derivative of the nucleophile containing the original blocking group. This transfer of the blocking group from the alkoxyorganomercaptosilane to the nucleophile could be driven, for example, by a greater thermodynamic stability of the products (alkoxyorganomercaptosilane and nucleophile containing the blocking group) relative to the initial reactants (blocked alkoxyorganomercaptosilane and nucleophile). For example, carboxyl blocking groups unblocked by amines would be seen to yield amides, sulfonyl blocking groups unblocked by amines would be seen to yield sulfonamides, sulfinyl blocking groups unblocked by amines would be seen to yield sulfenamides, phosphonyl blocking groups unblocked by amines would be seen to yield phosphonamides, phosphonyl blocking groups unblocked by amines would be seen to yield phosphonamides. What is important is that regardless of the blocking group initially present on the blocked mercaptosilane and regardless of the unblocking agent used, the initially substantially inactive (from the standpoint of coupling to the diene-based elastomer) blocked mercaptoalkoxysilane is substantially converted at the desired point in the rubber processing procedure to the active mercaptoalkoxysilane.

The unblocking agent could be added to the rubber mixture, for example, in the curative package (together with sulfur curative) or, alternatively, at any other mixing stage in the rubber mixing process as a single component, although practically it is added subsequent to the composite of pre-reacted amorphous silica and usually together with the curative in the final curative addition mixing stage.

Various classes of materials which can act as unblocking agents, but not normally effective as cure accelerators, allowing for selection between the two, are various oxides, hydroxides, carbonates, bicarbonates, alkoxides, phenoxides, sulfenamide salts, acetyl acetonates, carbon anions derived from high acidity C-N bonds, malonic acid esters, cyclopentadienes, phenols, sulfonamides, nitrites, fluorenes, tetra-alkyl ammonium salts, and tetra-alkyl phosphonium salts.

Representative examples of various unblocking agents are, for example, such nucleophiles as amines, imines and guanidines that contain at least one N-H bond. Some examples include: N,N'-diphenylguanidine, N,N'-di-ortho-tolylguanidine, hexamethylenetetramine and 4,4'-diaminodiphenylmethane.

Thus, when it is desired to unblock the blocked alkoxyorganomercaptosilane to enable the mercapto group (moiety) to interact with the elastomer(s) to thereby couple the pre-treated, hydrophobated, silica to the elastomer(s) it is seen that various unblocking agents may be used, depending somewhat upon the blocking moiety, or agent, used to block the chemical activity of the mercapto group of the blocked alkoxyorganomercaptosilane.

Representative examples of various blocked alkoxyorganomercaptosilanes are, for example, 2-triethoxysilyl-1-ethyl thioacetate; 2-trimethoxysilyl-1-ethyl thioacetate; 2-(methyldimethoxysilyl)-1-ethyl thioacetate; 3-trimethoxysilyl-1-propyl thioacetate; triethoxysilylmethyl thioacetate; trimethoxysilylmethyl thioacetate; triisopropoxysilylmethyl thioacetate; methyldiethoxysilylmethyl thioacetate; methyldimethoxysilylmethyl thioacetate; methyldiisopropoxysilylmethyl thioacetate; dimethylethoxysilylmethyl thioacetate; dimethylmethoxysilylmethyl thioacetate; dimethylisopropoxysilylmethyl thioacetate; 2-triisopropoxysilyl-1-ethyl thioacetate; 2-(methyldiethoxysilyl)-1-ethyl thioacetate; 2-(methyldiisopropoxysilyl)- 1-ethyl thioacetate; 2-(dimethylethoxysilyl)-1-ethyl thioacetate; 2-(dimethylmethoxysilyl)-1-ethyl thioacetate; 2-(dimethylisopropoxysilyl)- -1-ethyl thioacetate; 3-triethoxysilyl-1-propyl thioacetate; 3-triisopropoxysilyl-1-propyl thioacetate; 3-methyldiethoxysilyl-1-propyl thioacetate; 3-methyldimethoxysilyl-1-propyl thioacetate; 3-methyldiisopropoxysilyl-1-propyl thioacetate; 1-(2-triethoxysilyl-1-eth- yl)-4-thioacetylcyclohexane; 1-(2-triethoxysilyl-1-ethyl)-3-thioacetylcycl- ohexane; 2-triethoxysilyl-5-thioacetylnorbornene; 2-triethoxysilyl-4-thioa- cetylnorbornene; 2-(2-triethoxysilyl-1-ethyl)-5-thioacetylnorbornene; 2-(2-triethoxysilyl-1-ethyl)-4-thioacetylnorbornene; 1-(1-oxo-2-thia-5-triethoxysilylpenyl)benzoic acid; 6-triethoxysilyl-1-hexyl thioacetate; 1-triethoxysilyl-5-hexyl thioacetate; 8-triethoxysilyl-1-octyl thioacetate; 1-triethoxysilyl-7-octyl thioacetate; 6-triethoxysilyl-1-hexyl thioacetate; 1-triethoxysilyl-5-octyl thioacetate; 8-trimethoxysilyl-1-octyl thioacetate; 1-trimethoxysilyl-7-octyl thioacetate; 10-triethoxysilyl-1-decyl thioacetate; 1-triethoxysilyl-9-decyl thioacetate; 1-triethoxysilyl-2-butyl thioacetate; 1-triethoxysilyl-3-butyl thioacetate; 1-triethoxysilyl-3-methyl-2-butyl thioacetate; 1-triethoxysilyl-3-methyl-- 3-butyl thioacetate; 3-trimethoxysilyl-1-propyl thiooctoate; 3-triethoxysilyl-1-propyl thiopalmitate; 3-triethoxysilyl-1-propyl thiooctoate; 3-triethoxysilyl-1-propyl thiobenzoate; 3-triethoxysilyl-1-propyl thio-2-ethylhexanoate; 3-methyldiacetoxysilyl-1- -propyl thioacetate; 3-triacetoxysilyl-1-propyl thioacetate; 2-methyldiacetoxysilyl-1-ethyl thioacetate; 2-triacetoxysilyl-1-ethyl thioacetate; 1-methyldiacetoxysilyl-1-ethyl thioacetate; 1-triacetoxysilyl-1-ethyl thioacetate; 3-ethoxydidodecyloxy-1-propyl thioacetate; 3-ethoxyditetradecyloxy-1-propyl thioacetate; 3-ethoxydidodecyloxy-1-propyl-thiooctoate; 3-ethoxyditetradecyloxy-1-prop- yl-thiooctoate; tris-(3-triethoxysilyl-1-propyl)trithiophosphate; bis-(3-triethoxysilyl-1-propyl)methyldithiophosphonate; bis-(3-triethoxysilyl-1-propyl)ethyldithiophosphonate; 3-triethoxysilyl-1-propyldimethylthiophosphinate; 3-triethoxysilyl-1-prop- yldiethylthiophosphinate; tris-(3-triethoxysilyl-1-propyl)tetrathiophospha- te; bis-(3-triethoxysilyl-1-propyl)methyltrithiophosphonate; bis-(3-triethoxysilyl-1-propyl)ethyltrithiophosphonate; 3-triethoxysilyl-1-propyldimethyldithiophosphinate; 3-triethoxysilyl-1-propyldiethyldithiophosphinate; tris-(3-methyldimethoxysilyl-1-propyl)trithiophosphate; bis-(3-methyldimethoxysilyl-1-propyl)methyldithiophosphonate; bis-(3-methyldimethoxysilyl-1-propyl)ethyldithiophosphonate; 3-methyldimethoxysilyl-1-propyldimethylthiophosphinate; 3-methyldimethoxysilyl-1-propyldiethylthiophosphinate; 3-triethoxysilyl-1-propylmethylthiosulphate; 3-triethoxysilyl-1-propylmethanethiosulphonate; 3-triethoxysilyl-1-propylethanethiosulphonate; 3-triethoxysilyl-1-propylbenzenethiosulphonate; 3-triethoxysilyl-1-propyl- toluenethiosulphonate; 3-triethoxysilyl-1-propylnaphthalenethiosulphonate; 3-triethoxysilyl-1-propylxylenethiosulphonate; triethoxysilylmethylmethyl- thiosulphate; triethoxysilylmethylmethanethiosulphonate; triethoxysilylmethylethanethiosulphonate; triethoxysilylmethylbenzenethio- sulphonate; triethoxysilylmethyltoluenethiosulphonate; triethoxysilylmethylnaphthalenethiosulphonate; triethoxysilylmethylxylene- thiosulphonate and 3-octanothio-1-propyltriethoxysilane.

In summary, an exemplary blocked alkoxyorganoercaptosilane might be, for example, mercaptopropyl triethoxysilane, with its mercapto group blocked by such a moiety (organomercapto trialkylsilane, or mercaptopropyl triethoxysilane having a blocked mercapto moiety with a moiety which capable of being deblocked at an elevated temperature) may be used for which its mercapto moiety is then deblocked during vulcanization of the associated rubber composition at an elevated temperature such as, for example, a temperature in a range of from 140°C to 170°C. For example, see US-A- 6,127,468, US-A- 6,204,339, US-A- 6,414,061, US-A- 6,528,673 and US-A- 6,608,125 which are incorporated herein in their entirety. In practice, an unblocking agent (deblocking agent) might be comprised of, for example, from at least one of N,N'-diphenylguanidine and N,N'-di-orthotolylguanidine.

Representative of a blocked alkoxyorganomercaptosilane coupling agent is, for example, NXT™ from Momentive which is understood herein to comprise of a 3-octanothio-1-propyltriethoxysilane.

In practice, various alkoxyorganomercaptosilanes may, for example, be represented by the general formula (I):

(I) (X)ₙ(R₂O)₃₋ₙ-Si-R₃-SH

wherein X is a radical selected from halogen, particularly chlorine or bromine, preferably a chlorine radical, and alkyl radicals having from one to 16, preferably from one to 4, carbon atoms, preferably selected from methyl, ethyl, n-propyl and n-butyl radicals; wherein R₂ is an alkyl radical having from one to 16, preferably from one to 4 carbon atoms, preferably selected from methyl and ethyl radicals and R₃ is an alkylene radical having from one to 16, preferably from one to 4, carbon atoms, preferably a propylene radical; n is a value from zero to 3, preferably zero.

Representative alkoxyorganomercaptosilanes are, for example, triethoxymercaptopropylsilane, trimethoxymercaptopropylsilane, methyldimethoxy mercaptopropylsilane, methyldiethoxymercaptopropyl silane, dimethylmethoxy mercaptopropylsilane, triethoxymercaptoethylsilane, and tripropoxymercaptopropyl silane.

A further representative alkoxyorganomercaptosilane coupling agent (unblocked coupling agent) is an oligomeric organomercaptosilane comprised of a reaction product of 2-methyl-1,3-propane and S-[3-(triethoxysilyl)propyl] thiooctanol or, alternately, with S-[3-trichlorosilyl)propyl] thiooctanoate, particularly as mentioned in EP-A- 1,958,983. Representative of such oligomeric organomercaptosilane might be, for example, NXT-Z100™ from Momentive.

In further accordance with a preferred aspect of this invention, a method of preparing a rubber composition comprises mixing, based on parts by weight per 100 parts by weight of diene-based elastomer (phr):
(A) elastomers comprising:
   (1) at least one conjugated diene-based elastomer, or
   (2) conjugated diene-based elastomers comprising
      (a) from 0 to 55, alternately from 15 to 55, phr of at least one conjugated diene-based elastomer, and
      (b) 45 to 100, alternately from 45 to 85, phr of at least one elastomeric functionalized styrene/butadiene copolymer rubber (preferably having a Tg, for example, in a range of from -10°C to -70°C) comprising at least one of:
         (i) styrene/butadiene copolymer elastomers (SBR) having a bound styrene in a range of from 20 to 45 percent containing alkoxy silane groups (e.g. -Si-(OR)n groups); (i.e. said alkoxy groups being reactive with hydroxyl groups contained on said precipitated silica reinforcing filler),
         (ii) styrene/butadiene copolymer elastomers having a bound styrene content in a range of from 20 to 45 percent and containing amino-alkoxy silane groups with said amino-alkoxy silane groups connected to the elastomer through the silicon atom (e.g. R"-(NHₓ-R')ₘ-Si-(OR)ₙ groups where R' is an alkylene group of from 1 to 12 carbon atoms, R"is an alkyl group of from 0 to 10 carbon atoms and R is an alkyl group containing from 1 to 20 carbon atoms wherein at least one of said R groups is preferably an ethyl group, m is a value of 1 or 2, n is a value of 1 or 2 and x is a value ranging from 0 to 2); (i.e. said alkoxy silane groups being reactive with hydroxyl groups contained on precipitated silica reinforcing filler),
         (iii) styrene/butadiene copolymer elastomer containing an amine functional group (i.e. amine functionalized SBR); (i.e. said amine functional group being reactive with hydroxyl groups contained on precipitated silica reinforcing filler);
         (iv) styrene/butadiene copolymer elastomers having a bound styrene content in a range of from 20 to 45 percent and containing silane-sulfide end groups with said silane-sulfide groups connected to the elastomer through the silicon atom (e.g. (RO)ₓ-R_{y} - Si - R'-S) groups, where x ranges from 1, 2 and 3, y ranges from 0, 1 and 2, R is the same or different alkylene group having from 1 to 16 carbon atoms and R' is an alkyl, aryl or alkylaryl group with from 1 to 15 carbon atoms);
         (v) styrene/butadiene copolymer elastomer having hydroxyl functional groups (hydroxyl functionalized SBR); (said hydroxyl groups being reactive with hydroxyl groups on precipitated silica; and
         (vi) styrene/butadiene copolymer elastomer having epoxy groups (i.e. epoxy functionalized SBR); (i.e. said epoxy groups being reactive with hydroxyl groups on precipitated silica);
(B) 30 to 120, alternately 40 to 110, phr of reinforcing filler at a mixing temperature in a range of from 140°C to 180°C, wherein said reinforcing filler comprises a combination of rubber reinforcing carbon black from 40 to 110 phr of silica, preferably precipitated silica which contains hydroxyl groups (e.g. silanol groups) on its surface; and
(C) silica coupler comprising:
   (1) alkoxyorganomercaptosilane, and
   (2) blocked siloxyorganomercaptosilane (i.e. having its mercapto moiety reversibly blocked);
(D) mixing an unblocking agent with the resulting rubber mixture, (at a temperature such as, for example, in a range of from 100°C to 125°C and concurrently or thereafter mixing sulfur curative therewith at a temperature in a range of from 100°C to 125°C, and thereafter
(E) curing the resulting mixture at an elevated temperature, for example in range of from 140°C to 170°C.

In one embodiment, said conjugated diene-based elastomer comprises:
(A) polybutadiene rubber, particularly cis 1,4-polybutadiene rubber, or
(B) a combination of polybutadiene rubber, particularly cis 1,4-polybutadiene rubber, and cis 1,4-polyisoprene rubber.

Preferably, the ratio (i.e. the weight ratio) of said alkoxyorganomercaptosilane to said blocked alkoxyorganomercaptosilane is in a range of from 0.1/1 to 0.5/1.

In additional accordance with this invention, an article of manufacture is provided having at least one component comprising the rubber composition.

In further accordance with this invention, a tire is provided having at least one component comprising the rubber composition.

In additional accordance with this invention, the tire component is a tire tread and particularly a tire tread intended to be a running surface of a tire.

In practice, various conjugated diene-based elastomers may be used for the rubber composition, representative of which are, for example, polymers comprising at least one of 1,3-butadiene and isoprene and copolymers comprising styrene with at least one of 1,3-butadiene and isoprene. Such elastomers are therefore sulfur curable elastomers.

Representative examples of such conjugated diene-based elastomers are, for example, cis 1,4-polyisoprene rubber (natural and/or synthetic), and preferably natural rubber, emulsion polymerization prepared styrene/butadiene copolymer rubber, organic solution polymerization prepared styrene/butadiene rubber, 3,4-polyisoprene rubber, isoprene/butadiene rubber, styrene/isoprene/butadiene terpolymer rubbers, cis 1,4-polybutadiene, medium vinyl polybutadiene rubber (35 to 50 percent vinyl content), high vinyl polybutadiene rubber (50 to 90 percent vinyl content), styrene/isoprene copolymers, emulsion polymerization prepared styrene/butadiene/acrylonitrile terpolymer rubber and butadiene/acrylonitrile copolymer rubber.

Other and additional conjugated diene-based elastomers include solution polymerization prepared high vinyl styrene/butadiene copolymer rubber (HV-S-SBR) having a bound styrene content in a range of 5 to 45 percent and a vinyl 1,2-content based upon its polybutadiene portion in a range of from 30 to 90 percent, particularly such (HV-S-SBR) having a relatively high onset high glass transition (Tg) value in a range of from -20°C to -40°C to promote a suitable wet traction for the tire tread and also a relatively high hot rebound value (100°C) to promote a relatively low rolling resistance for the tread rubber composition intended for relatively heavy duty use. Such specialized high vinyl styrene/butadiene rubber (HV-S-SBR) might be prepared, for example, by polymerization in an organic solution of styrene and 1,3-butadiene monomers to include a chemical modification of polymer chain endings and to promote formation of vinyl 1,2-groups on the butadiene portion of the copolymer. A representative HV-S-SBR may be, for example, Duradene 738™ from Firestone/Bridgestone.

Other and additional conjugated diene-based elastomers are functionalized styrene/butadiene copolymer elastomers (functionalized SBR elastomers) containing amine and/or siloxy (e.g. alkoxy silane as Si(OR)₃) functional groups.

Representative of amine functionalized SBR elastomers are, for example, SE SLR-4630 synthetic rubber from Dow Olefinverbund GmbH and T5560™ from JSR and in-chain functionalized SBR elastomers mentioned in US-A- 6,936,669.

Representative of siloxy functionalized SBR elastomers is, for example, SE SLR-4601 synthetic rubber from Dow Olefinverbund GmbH.

Representative of a combination of amino-siloxy functionalized SBR elastomers with one or more amino-siloxy groups connected to the elastomer is, for example, HPR355™ from JSR and amino-siloxy functionalized SBR elastomers mentioned in US-A- 2007/0185267.

Styrene/butadiene elastomers end functionalized with a silane-sulfide group are mentioned in WO-A- 2007/047943.

Representative of hydroxy functionalized SBR elastomers is, for example, Tufdene 3330™ from Asahi.

Representative of epoxy functionalized SBR elastomers is, for example, Tufdene E50™ from Asahi.

In practice, it is therefore envisioned that said sulfur vulcanizable conjugated diene-based elastomer comprises, for example, polymers of at least one of isoprene and 1,3-butadiene; copolymers of styrene and at least one of isoprene and 1,3-butadiene; high vinyl styrene/butadiene elastomers having a vinyl 1,2-content based upon its polybutadiene in a range of from 30 to 90 percent and functionalized copolymers comprising styrene and 1,3-butadiene ("functionalized SBR") selected from amine functionalized SBR, siloxy functionalized SBR, combination of amine and siloxy functionalized SBR, epoxy functionalized SBR and hydroxy functionalized SBR.

### EXAMPLE I

Rubber compositions were prepared for evaluating the effect of a combination of a blocked alkoxyorganomercaptosilane coupling agent (having its mercapto moiety reversibly blocked) and an alkoxyorganomercaptosilane coupling agent without its mercapto moiety being blocked which is sometimes referred to in this Example as a "reactive silane". The reactive silane was added to the rubber mixture in the second non-productive mixing stage (NP2) to evaluate a best practice for this invention.

Sample A is a comparative rubber sample containing what is considered herein as a suitable loading level of 8 phs of the blocked siloxyorganomercaptosilane coupling agents (parts by weight per 100 parts by weight reinforcing silica, or phs).

Samples B and C are comparative rubber samples containing higher loading levels 9.5 and 11 phs, respectively, as compared to the 8 phs loading for rubber Sample A, of the blocked siloxyorganomercaptosilane coupling agent (reversibly blocked mercapto group).

Rubber Sample D is a comparative rubber sample containing what is considered herein as a suitable loading level of 8 phs of the siloxyorganomercaptosilane coupling agent.

Experimental rubber Samples E and F contained a combination of an alkoxyorganomercaptosilane and a blocked alkoxyorganomercaptosilane coupling agent with the combined loading levels of the two coupling agents being 9.5 and 11 phs, respectively. The alkoxyorganomercaptosilane was added to the rubber composition in the second non-productive mixing stage (NP2).

The rubber compositions were prepared by mixing the ingredients in four sequential non-productive (NP) and productive (PR) mixing steps in internal rubber mixers. The dump temperature for NP1, NP2 was 170°C. The dump temperature for NP3 and PR was 160 and 120°C, respectively.

The basic recipe for the rubber samples is presented in the following Table 1 and recited in parts by weight unless otherwise indicated.

**Table 1**

| **Non-Productive Mixing Step (NP1), (mixed to 170°C)** | **Parts** |
|---|---|
| Functionalized solution SBR¹ | 84 |
| Cis 1,4-polybutadiene rubber² | 16 |
| Silica³ | 60 |
| Rubber processing oil and resin⁴ | 28.5 |
| Blocked alkoxyorganomercaptosilane coupling agent⁵ | Variable |
| Alkoxyorganomercaptosilane coupling agent⁶ | Variable |
| Fatty acid⁷ | 3 |

| **Second Non-Productive Mixing Step (NP2), (mixed to 170°C)** | |
|---|---|
| Silica³ | 30 |
| Rubber processing oil and wax⁴ | 13.5 |
| Carbon black N120 | 10 |
| Blocked alkoxyorganomercaptosilane coupling agent⁵ | Variable |
| Alkoxyorganomercaptosilane coupling agent³ | Variable |

| **Productive Mixing Step (PR), (mixed to 120°C)** | |
|---|---|
| Sulfur | 1.9 |
| Zinc oxide | 2.5 |
| Sulfenamide based primary sulfur cure accelerator | 2.1 |
| Diphenyl guanidine (DPG) secondary sulfur cure accelerator | Variable |

| | |
|---|---|
| ¹Functionalized solution polymerization prepared SBR from the JSR company as HPR355™, which might be referred to as a functionalized SBR comprised of a styrene/butadiene copolymer elastomer having aminosilane functional groups having styrene content of 27 percent and a vinyl content of 58 percent based on the total elastomer ²High cis 1,4-polybutadiene rubber as CB25™ from the Lanxess Company ³Precipitated silica as Zeosil Z1165MP™ from Rhodia ⁴Naphthenic medium rubber processing oil ⁵Blocked alkoxyorganomercaptosilane coupling agent (having its mercapto moiety reversibly blocked) from the Momentive Company as NXT™ which might be referred to as comprising a 3-octanothio-1-propyltriethoxysilane ⁶Alkoxyorganomercaptosilane coupling agent (without its mercapto moiety being reversibly blocked) from the Momentive Company as NXT®Z100, as an unblocked siloxyorganomercaptosilane. | |

### Table 2 reports processing and physical properties of the rubber compositions.

**Table 2**

| | **Comparative** | | | | **Experimental** | |
|---|---|---|---|---|---|---|
| **Mixing Stage/Coupling Agent** | **A** | **B** | **C** | **D** | **E** | **F** |
| **NP1 (first non-productive mixing stage):** | | | | | | |
| Blocked alkoxyorganomercaptosilane (phr) | 4.8 | 4.8 | 4.8 | 0 | 4.8 | 4.8 |
| Alkoxyorganomercaptosilane (phr) | 0 | 0 | 0 | 4.8 | 0 | 0 |
| **NP2 (second non-productive mixing stage):** | | | | | | |
| Blocked alkoxyorganomercaptosilane (phr) | 2.4 | 3.75 | 5.10 | 0 | 2.4 | 2.4 |
| Alkoxyorganomercaptosilane (phr) | 0 | 0 | 0 | 2.4 | 1.35 | 2.7 |
| **PR (productive mixing stage)** | | | | | | |
| Diphenylguanidine (DPG) accelerator (phr) | 2.1 | 1.1 | 2.1 | 0.8 | 1.8 | 1.4 |

| **Rheometer¹, 160°C** | | | | | | |
|---|---|---|---|---|---|---|
| Maximum torque (dNm) | 17.26 | 17.42 | 17.27 | 18.93 | 17.51 | 17.48 |
| Minimum torque (dNm) | 2.20 | 2.14 | 2.03 | 6.38 | 2.60 | 2.83 |
| T90 (minutes) | 11.43 | 10.45 | 9.62 | 5.35 | 8.41 | 5.82 |

| **Mooney Viscosity, 100°C** | | | | | | |
|---|---|---|---|---|---|---|
| ML(1+4) | 67 | 67 | 64 | 110 | 76 | 74 |

| **RPA (Rubber Process Analysis), (100°C)** | | | | | | |
|---|---|---|---|---|---|---|
| Uncured storage modulus (G') 15 % strain, MPa | 0.20 | 0.20 | 0.20 | 0.50 | 0.24 | 0.26 |
| Cured storage modulus (G') 10 % strain (MPa) | 1.55 | 1.58 | 1.56 | 1.71 | 1.65 | 1.62 |
| Cured tan delta at 100°C, 10% strain | 0.113 | 0.105 | 0.103 | 0.100 | 0.102 | 0.090 |

| **Mooney Scorch, 120°C** | | | | | | |
|---|---|---|---|---|---|---|
| Scorch time 5 pt rise, min | 54.07 | 51.7 | 47.27 | 14.88 | 34.57 | 21.63 |

| **Stress-strain, ATS, 14 min, 160°C²** | | | | | | |
|---|---|---|---|---|---|---|
| Tensile strength (MPa) | 18.1 | 17.7 | 17.8 | 12.7 | 17.8 | 15.2 |
| Elongation at break % | 468 | 450 | 445 | 280 | 396 | 341 |
| 100% ring modulus (MPa) | 1.8 | 1.9 | 2.0 | 2.3 | 2.1 | 2.2 |
| 300% ring modulus (MPa) | 11.1 | 11.6 | 11.9 | -- | 13.7 | 12.8 |

| **Rebound** | | | | | | |
|---|---|---|---|---|---|---|
| 23°C | 35.6 | 36.2 | 35.1 | 28.9 | 36.1 | 36.7 |
| 100°C | 63.9 | 64.8 | 66.0 | 65.5 | 66.9 | 65.9 |

| **Shore A Hardness** | | | | | | |
|---|---|---|---|---|---|---|
| 23°C | 64 | 64 | 65 | 69 | 65 | 65 |
| 100°C | 59 | 60 | 60 | 61 | 60 | 59 |

| **RDS Strain Sweep, 10 Hz, 30°C³** | | | | | | |
|---|---|---|---|---|---|---|
| Modulus G', at 10% strain (MPa) | 1.92 | 1.78 | 1.89 | 2.21 | 1.84 | 1.91 |
| Tan delta at 10% strain | 0.183 | 0.189 | 0.172 | 0.202 | 0.155 | 0.156 |
| DIN abrasion, 23°C, relative volume loss | 110 | 100 | 103 | 115 | 89 | 89 |
| Grosch abrasion loss rate, 23°C, mg/km | 43.5 | 40.7 | 40.5 | 36.6 | 34.8 | 34.6 |

| | | | | | | |
|---|---|---|---|---|---|---|
| ¹Data according to Rubber Process Analyzer as RPA 2000™ instrument by Alpha Technologies, formerly of the Flexsys Company and formerly of the Monsanto Company ²Data according to Automated Testing System instrument by the Instron Corporation which incorporates six tests in one system. Such instrument may determine ultimate tensile, ultimate elongation, moduli, etc. Data reported in the Table is generated by running the ring tensile test. ³Data by a rheometric spectrometric analytical instrument. | | | | | | |

It can be seen from Table 2 that the Comparative silica-containing rubber Sample A containing a loading of a total of 7.2 phr (8.0 phs) of the blocked alkoxyorganomercaptosilane coupling agent exhibited desirable processing characteristics as indicated by the relatively low Mooney viscosity of 67 units.

It can further been seen that, for Comparative rubber Samples B and C, the processing characteristic (the Mooney viscosity) of the silica containing rubber compositions either maintained or improved (was reduced) when the loading of the blocked alkoxyorganomercaptosilane coupling agent was increased to 8.55 and 9.9 phr (9.5 and 11 phs).

However, Comparative rubber Sample D containing a loading of 7.2 phr (8 phs) of the alkoxyorganomercaptosilane coupling agent exhibited very undesirable processing characteristics as indicated by the very high Mooney viscosity of 110 units.

Experimental rubber Samples E and F exhibited just slightly higher, but still very desirable, Mooney viscosities as compared to Comparative rubber Samples B and C with the same total loading levels of the blocked/unblocked alkoxyorganomercaptosilane coupling agents.

It can be seen from Table 2 that the Comparative rubber Sample A containing a loading of 7.2 phr (8 phs) of the blocked alkoxyorganomercaptosilane coupling agent exhibited desirable processing characteristics as indicated by the relatively low uncured elastic storage modulus G', at 15 percent strain, of 0.20 MPa.

It can further be seen that, for Comparative rubber Samples B and C, the processing characteristics (uncured elastic storage modulus G' at 15 percent strain) of the silica-containing rubber compositions were essentially the same as Comparative rubber Sample A when the loading of the blocked alkoxyorganomercaptosilane coupling agent was increased to 8.55 and 9.9 phr (9.5 and 11 phs).

However, Comparative rubber Sample D containing a loading of 7.2 phr (8 phs) of the alkoxyorganomercaptosilane coupling agent exhibited very undesirable processing characteristics as indicated by the high uncured elastic storage modulus G' at 15 percent strain of 0.50 MPa.

Experimental rubber Samples E and F exhibited just slightly higher, but still very desirable, uncured elastic storage modulus G' at 15 percent strain, than Comparative rubber Samples B and C with the same total loading levels of the blocked/unblocked alkoxyorganomercaptosilane coupling agents.

It can therefore be seen that the processing characteristics of the rubber composition containing a combination of the two different alkoxyorganomercaptosilane coupling agents was therefore essentially maintained in comparison to Comparative rubber Sample A.

This is considered herein to be significant (as will be later discussed) in a sense that the representative physical properties of the resultant silica-containing rubber composition can be enhanced by use of the combination of coupling agents without significantly affecting the rubber processing characteristics (Mooney viscosity and uncured elastic storage modulus G') of the rubber composition.

In Table 2, it can be seen that that the minimum torque value during cure of the silica containing rubber composition by the Rubber Process Analyzer as RPA 2000™ instrument was substantially maintained from the use of the combined blocked alkoxyorganomercaptosilane and unblocked alkoxyorganomercaptosilane coupling agents as compared to the minimum torque of Comparative rubber Sample A.

In contrast, the use of the alkoxyorganomercaptosilane coupling agent alone resulted in the rubber composition having a much increased, and normally undesirable, minimum torque.

This is considered herein to be significant, as will be discussed hereafter, that enhancement of properties of the rubber composition obtained from the use of the combination of coupling agents was not at an expense of processability (minimum torque) of the rubber composition.

It can also be seen from Table 2 that a desirable high elongation at break property (significantly greater than 300 percent elongation) for the Comparative rubber Sample A was substantially maintained from the use of the combined blocked and unblocked alkoxyorganomercaptosilane coupling agents while using the unblocked alkoxyorganomercaptosilane coupling alone would lead to the rubber composition having an elongation shorter than 300 percent.

It can further be seen from Table 2 that the rebound values at 23°C and high temperatures were significantly improved through the use of the combination of the alkoxyorganomercaptosilane coupling agent and blocked alkoxyorganomercaptosilane coupling agent as compared to Comparative rubber Samples A and D. The rebound values of Experimental rubber Samples E and F were either equal to or higher than that of the Comparative rubber Samples B and C where an equal amount of total coupling agents was used. This is considered to be also significant in the sense that a rubber composition with high rebound value is indicative of a beneficially low hysteresis of the rubber composition which promotes low internal heat buildup and promotes low rolling resistance of a tire having a tread of such rubber composition with a resultant predictive improved fuel economy for an associated vehicle.

It can further be seen from Table 2 that while increasing the loading of the blocked alkoxyorganomercaptosilane coupling agent in the rubber composition led to some minor enhancement in the DIN and Grosch abrasion resistance for Comparative rubber Samples B and C, the use of the combined alkoxyorganomercaptosilane coupling agent and blocked alkoxyorganomercaptosilane coupling agent (Experimental rubber Samples E and F) resulted in silica reinforced rubber compositions with surprisingly significantly improved abrasion resistance as compared to Comparative rubber samples A and D and by using either of the coupling agents alone. This is considered to be significant in the sense that use of the alkoxyorganomercaptosilane in combination with the blocked alkoxyorganomercaptosilane led to a synergistic enhancement of the indicated properties of the rubber composition.

This example demonstrates the desirability and benefit of the use of the alkoxyorganomercaptosilane coupling agent in combination with the blocked alkoxyorganomercaptosilane coupling agent for enhanced rubber composition performance without significantly compromising the processing characteristics (Mooney viscosity and minimum torque) of the rubber composition containing the blocked alkoxyorganomercaptosilane coupling agent alone. Desirable rubber composition properties (cured and uncured rubber properties) were achieved even though the alkoxyorganomercaptosilane coupling agent (unblocked coupling agent) was added in the NP2 mixing step, or stage, at a relatively high mixing temperature of 170°C.

### EXAMPLE II

Rubber compositions were prepared for evaluating the effect of a combination of a blocked alkoxyorganomercaptosilane coupling agent (having its mercapto moiety reversibly blocked) and an alkoxyorganomercaptosilane without its mercapto moiety not being reversibly blocked (which is sometimes referred to in this Example as a "reactive silane").

This Example II differs from Example I in the sequence of addition of the reactive silane coupling agent. For this Example II, instead of adding the reactive silane coupling agent in the second non-productive mixing stage (NP2) as was done in Example I, the reactive silane coupling agent was added in third non-productive mixing stage (NP3) to evaluate desirable practices for this invention.

Sample A is a Comparative rubber Sample containing what is considered herein as a suitable loading level of 8 phs of the blocked alkoxyorganomercaptosilane coupling agent.

Rubber Samples B and C are Comparative rubber Samples containing higher loading levels of 9.5 and 11 phs, respectively, as compared to a loading level of 8 phs for Comparative rubber Sample A of the blocked alkoxyorganomercaptosilane coupling agent.

Comparative rubber Sample D contained what is considered herein as a suitable loading level of 8 phs of the unblocked alkoxyorganomercaptosilane coupling agent having a tread of such rubber composition.

Experimental rubber Samples G and H contained a combination of (blocked and unblocked) alkoxyorganomercaptosilane coupling agents with combined loading levels of 9.5 and 11 phs, respectively. For preparation of these Experimental rubber Samples, the unblocked alkoxyorganomercaptosilane coupling agent was added to the rubber composition in the third non-productive mixing step (NP3).

The rubber compositions were prepared by mixing the ingredients in three sequential non-productive mixing stages (NP1, NP2, and NP3) followed by a productive mixing stage (PR) in internal rubber mixers. The dump mixing temperatures for the mixing stages was 170^{°}C for NP1 and NP2, 160^{°}C for NP3 and 120^{°}C for PR.

The basic recipe for the rubber Samples is presented in the following Table 3 and recited in parts by weight unless otherwise indicated.

**Table 3**

| **First Non-Productive Mixing Step (NP1), (mixed to 170°C)** | **Parts** |
|---|---|
| Functionalized solution SBR¹ | 80 |
| Cis 1,4-polybutadiene rubber² | 20 |
| Silica³ | 60 |
| Rubber processing oil and resin⁴ | 28.5 |
| Blocked alkoxyorganomercaptosilane coupling agent⁵ | Variable |
| Alkoxyorganomercaptosilane coupling agent⁶ | Variable |
| Fatty acid (basically stearic and palmitic acids) | 3 |

| **Second Non-Productive Mixing Step (NP2), (mixed to 170°C)** | |
|---|---|
| Silica | 30 |
| Rubber processing oil and wax⁴ | 13.5 |
| Carbon black N120 | 10 |
| Blocked alkoxyorganomercaptosilane coupling agent⁵ | Variable |
| Alkoxyorganomercaptosilane coupling agent⁶ | Variable |

| **Third Non-Productive Mixing Step (NP3) (mixed to 160°C)** | |
|---|---|
| Alkoxyorganomercaptosilane coupling agent⁶ | Variable |

| **Productive Mixing Step (PR), (mixed to 120°C)** | |
|---|---|
| Sulfur | 1.9 |
| Zinc oxide | 2.5 |
| Sulfenamide primary sulfur cure accelerator | 2.1 |
| Diphenyl guanidine (DPG) secondary sulfur cure accelerator | Variable |

The noted ingredients are those used in Example I unless otherwise indicated.

The following Table 4 illustrates processing characteristics and various physical properties of rubber compositions based upon the basic recipe of Table 3.

**Table 4**

| | **Comparative** | | | | **Experimental** | |
|---|---|---|---|---|---|---|
| **Mixing Stage/Coupling Agent** | **A** | **B** | **C** | **D** | **G** | **H** |
| **First non-productive mixing stage (NP1):** | | | | | | |
| Blocked alkoxyorganomercaptosilane (phr) | 4.8 | 4.8 | 4.8 | 0 | 4.8 | 4.8 |
| Alkoxyorganomercaptosilane (phr) | 0 | 0 | 0 | 4.8 | 0 | 0 |

| **Second non-productive mixing stage (NP2):** | | | | | | |
|---|---|---|---|---|---|---|
| Blocked alkoxyorganomercaptosilane (phr) | 2.4 | 3.75 | 5.1 | 0 | 2.4 | 2.4 |
| Alkoxyorganomercaptosilane (phr) | 0 | 0 | 0 | 2.4 | 0 | 0 |

| **Third non-productive mixing stage (NP3):** | | | | | | |
|---|---|---|---|---|---|---|
| Alkoxyorganomercaptosilane (phr) | 0 | 0 | 0 | 0 | 1.35 | 2.7 |

| **PR (productive mixing stage)** | | | | | | |
|---|---|---|---|---|---|---|
| Diphenylguanidine (DPG) accelerator (phr) | 2.1 | 2.1 | 2.1 | 0.8 | 1.8 | 1.4 |

| **Rheometer¹, 160°C** | | | | | | |
|---|---|---|---|---|---|---|
| Maximum torque (dNm) | 17.26 | 17.42 | 17.27 | 18.93 | 17.20 | 16.82 |
| Minimum torque (dNm) | 2.2 | 2.14 | 2.03 | 6.38 | 2.36 | 3.14 |
| T90 (minutes) | 11.43 | 10.45 | 9.62 | 5.35 | 8.68 | 5.83 |
| Mooney Viscosity, 100°C ML (1+4) | 67 | 67 | 64 | 110 | 72 | 82 |

| **RPA (Rubber Process Anaiysis), (100^{°}C)** | | | | | | |
|---|---|---|---|---|---|---|
| Uncured storage modulus (G') 15 % strain, MPa | 0.20 | 0.20 | 0.20 | 0.50 | 0.22 | 0.28 |
| Cured storage modulus (G') 10 % strain (MPa) | 1.55 | 1.58 | 1.56 | 1.71 | 1.65 | 1.57 |
| Cured tan delta at 100°C, 10% strain | 0.113 | 0.105 | 0.103 | 0.100 | 0.105 | 0.104 |
| Mooney Scorch, 120°C Scorch time 5 pt rise, min | 54.07 | 51.7 | 47.27 | 14.88 | 34.65 | 18.1 |

| **Stress-strain, ATS, 14 min, 160°C²** | | | | | | |
|---|---|---|---|---|---|---|
| Tensile strength (MPa) | 18.1 | 17.7 | 17.8 | 12.7 | 18.3 | 15.4 |
| Elongation at break % | 468 | 450 | 445 | 280 | 420 | 353 |
| 100% ring modulus (MPa) | 1.8 | 1.9 | 2.0 | 2.3 | 2.1 | 2.2 |
| 300% ring modulus (MPa) | 11.1 | 11.6 | 11.9 | -- | 13.1 | 14 |

| **Rebound** | | | | | | |
|---|---|---|---|---|---|---|
| 23°C | 35.6 | 36.2 | 35.1 | 28.9 | 35.7 | 33.8 |
| 100°C | 63.9 | 64.8 | 66.0 | 65.5 | 64.4 | 65.7 |

| **Shore A Hardness** | | | | | | |
|---|---|---|---|---|---|---|
| 23°C | 64 | 64 | 65 | 69 | 65 | 66 |
| 100°C | 59 | 60 | 60 | 61 | 60 | 60 |

| **RDS Strain Sweep, 10 Hz, 30°C³** | | | | | | |
|---|---|---|---|---|---|---|
| Modulus G', at 10% strain (MPa) | 1.92 | 1.78 | 1.89 | 2.21 | 1.36 | 1.81 |
| Tan delta at 10% strain | 0.183 | 0.189 | 0.172 | 0.202 | 0.176 | 0.171 |
| DIN abrasion, 23°C, relative volume loss | 110 | 100 | 103 | 115 | 87 | 79 |
| Grosch abrasion loss rate, 23°C, mg/km | 43.5 | 40.7 | 40.5 | 36.6 | 34 | 32.9 |

It can be seen from Table 4 that the Experimental rubber Sample G exhibited just slightly higher, but still vary desirable, Mooney viscosity than Comparative rubber Samples A, B and C, while Experimental rubber Sample H showed much higher, but still acceptable, Mooney viscosity than Comparative rubber Samples A, B and C.

It can also be seen from Table 4 that Experimental rubber Sample G exhibited very desirable uncured elastic storage modulus G' at 15 percent strain, while Experimental rubber Sample H exhibited just slightly higher, but still acceptable, uncured elastic storage modulus G' than Comparative rubber Samples A, B and C.

Comparing Experimental rubber Sample F (from Example I) to Experimental rubber Sample H (from Example II), it can be seen that adding the reactive silane coupling agent in the second non-productive mixing stage (NP2) is more desirable from the Mooney viscosity point of view.

It can therefore be seen that the processing characteristic of the rubber composition containing a combination of blocked and unblocked alkoxyorganomercaptosilane coupling agents (Experimental rubber Samples G and H) was essentially maintained in comparison with Comparative rubber Sample A which only used a blocked alkoxyorganomercaptosilane coupling agent.

This is considered herein to be significant (as will be later discussed) in a sense that the representative physical properties of the resultant silica-containing rubber composition can be enhanced by the use of the combination of coupling agents without significantly affecting the processing characteristics (Mooney viscosity and uncured elastic storage modulus G') or the uncured rubber composition.

In Table 4, it can be seen that the minimum torque value during cure of the silica-containing rubber composition by the Rubber Process Analyzer was substantially maintained for the use of the combined blocked and unblocked alkoxyorganomercaptosilane coupling agents as compared to the minimum torque value for Comparative rubber Sample A.

This is considered herein to be significant in a sense that enhancement of properties of the rubber composition obtained from the use of the combination of coupling agents was not at the expense of processability in the sense of the aforesaid minimum torque of the rubber composition.

It can also be seen from Table 4 that the high elongation at break property (significantly greater than 300 percent elongation) for the Comparative rubber Sample A was substantially maintained from the use of the combined blocked and unblocked alkoxyorganomercaptosilane coupling agents while using the unblocked alkoxyorganomercaptosilane coupling alone would lead to the rubber composition having an elongation shorter than 300 percent.

It can further be seen from Table 4 that the rebound values at 23°C and high temperatures were significantly improved through the use of the combination of the alkoxyorganomercaptosilane coupling agent and blocked alkoxyorganomercaptosilane coupling agent as compared to Comparative rubber Sample A. The rebound values Experimental rubber Samples G and H were either equal to or higher than that of the Comparative rubber Samples B and C where an equal amount of total coupling agents was used. This is considered to be significant in the sense that a rubber composition with high rebound value is indicative of a beneficially low hysteresis of the rubber composition which promotes low internal heat buildup and promotes low rolling resistance of a tire having a tread of such rubber composition with a resultant predictive improved fuel economy for an associated vehicle.

It can further be seen from Table 4 that while increasing the loading of the blocked alkoxyorganomercaptosilane coupling agent in the rubber composition led to some minor enhancement in the DIN and Grosch abrasion resistance for Comparative rubber Samples B and C, while the use of the combined alkoxyorganomercaptosilane coupling agent and blocked alkoxyorganomercaptosilane coupling agent (Experimental rubber Samples G and H) resulted in silica reinforced rubber compositions with surprisingly significantly improved abrasion resistance as compared to Comparative rubber Samples A and D and by using either of the coupling agents alone. This is considered to be significant in the sense that use of the alkoxyorganomercaptosilane in combination with the blocked alkoxyorganomercaptosilane led to a synergistic enhancement of the indicated properties of the rubber composition.

This example demonstrates the desirability and benefit of the use of the alkoxyorganomercaptosilane coupling agent in combination with the blocked alkoxyorganomercaptosilane coupling agents for enhanced rubber composition performance without significantly compromising the processing characteristics (Mooney viscosity and minimum torque) of the rubber composition containing the blocked alkoxyorganomercaptosilane coupling agent alone. Desirable rubber composition properties (cured and uncured rubber properties) were achieved even though the alkoxyorganomercaptosilane coupling agent (unblocked coupling agent) was added in the NP3 mixing step, or stage, at a relatively high mixing temperature of 160°C.

### EXAMPLE III

Rubber compositions were prepared for evaluating the effect of a combination of a blocked silane coupling agent and the more reactive (unblocked) silane coupling agent. The reactive silane coupling agent was added at different mixing stages with an intention of evaluating a best practice of this invention.

This Example III differs from Examples I and II in one aspect in that the total loading of the combination of blocked and unblocked silane coupling agents is reduced to 8 phs in the rubber composition with an intention of reducing the cost of the rubber composition.

Experimental rubber Samples I, J, K and L contained a combination of the blocked alkoxyorganomercaptosilane coupling agent and an unblocked alkoxyorganomercaptosilane coupling agent. The more reactive unblocked coupling agent was added in the second non-productive mixing stage (NP2) for Experimental rubber Samples I and J and in the third non-productive mixing stage (NP3) for Experimental rubber Samples K and L.

The rubber Samples were prepared by mixing the ingredients in three non-productive mixing stages (NP1, NP2 and NP3) followed by a productive mixing stage (PR) in the manner of Example I.

The basic recipe for the rubber samples is presented in the following Table 5 and recited in parts by weight unless otherwise indicated.

**Table 5**

| **First Non-Productive Mixing Step (NP1), (mixed to 170°C)** | **Parts** |
|---|---|
| Functionalized solution SBR¹ | 80 |
| Cis 1,4-polybutadiene rubber² | 20 |
| Silica³ | 60 |
| Rubber processing oil and resin⁴ | 28.5 |
| Blocked alkoxyorganomercaptosilane coupling agent⁵ | Variable |
| Alkoxyorganomercaptosilane coupling agent⁶ | Variable |
| Fatty acid (basically stearic and palmitic acids) | 3 |

| **Second Non-Productive Mixing Step (NP2), (mixed to 170°C)** | |
|---|---|
| Silica | 30 |
| Rubber processing oil and wax⁴ | 13.5 |
| Carbon black N120 | 10 |
| Blocked alkoxyorganomercaptosilane coupling agent⁵ | Variable |
| Alkoxyorganomercaptosilane coupling agent⁶ | Variable |
| **Third Non-Productive Mixing Step (NP3) (mixed to 160°C)** | |
| Alkoxyorganomercaptosilane coupling agent⁶ | Variable |

| **Productive Mixing Step (PR), (mixed to 120°C)** | |
|---|---|
| Sulfur | 1.9 |
| Zinc oxide | 2.5 |
| Sulfenamide primary sulfur cure accelerator | 2.1 |
| Diphenyl guanidine (DPG) secondary sulfur cure accelerator | Variable |

The noted ingredients are those used in Example I unless otherwise noted.

The following Table 6 illustrates processing characteristics and various physical properties of rubber compositions based upon the basic recipe of Table 5.

**Table 6**

| | **Comparative** | | **Experimental** | | | |
|---|---|---|---|---|---|---|
| **Mixing Stage/Coupling Agent** | **A** | **D** | **I** | **J** | **K** | **L** |
| **First non-productive mixing stage(NP1):** | | | | | | |
| Blocked alkoxyorganomercaptosilane (phr) | 4.8 | 0 4.8 | 3.9 | 3 | 3.9 | 3 |
| Alkoxyorganomercaptosilane (phr) | 0 | 4.8 | 0 | 0 | 0 | 0 |

| **Second non-productive mixing stage(NP2):** | | | | | | |
|---|---|---|---|---|---|---|
| Blocked alkoxyorganomercaptosilane (phr) | 2.4 | 0 | 1.95 | 1.5 | 1.95 | 1.5 |
| Alkoxyorganomercaptosilane (phr) | 0 | 2.4 | 1.35 | 2.7 | 0 | 0 |

| **Third non-productive mixing stage(NP3):** | | | | | | |
|---|---|---|---|---|---|---|
| Alkoxyorganomercaptosilane (phr) | 0 | 0 | 0 | 0 | 1.35 | 2.7 |

| **PR (productive mixing stage)** | | | | | | |
|---|---|---|---|---|---|---|
| Diphenylguanidine (DPG) accelerator (phr) | 2.1 | 0.8 | 1.8 | 1.4 | 1.8 | 1.4 |

| **Rheometer¹, 160°C** | | | | | | |
|---|---|---|---|---|---|---|
| Maximum torque (dNm) | 17.26 | 18.93 | 17.12 | 16.46 | 17.2 | 16.64 |
| Minimum torque (dNm) | 2.2 | 6.38 | 2.63 | 2.87 | 2.52 | 2.65 |
| T90 (minutes) | 11.43 | 5.35 | 9.63 | 8.11 | 9.13 | 7.62 |
| Mooney Viscosity, 100°C ML(1+4) | 67 | 110 | 76 | 78 | 74 | 75 |

| **RPA (Rubber Process Analysis), (100°C)** | | | | | | |
|---|---|---|---|---|---|---|
| Uncured storage modulus (G') 15 % strain, MPa | 0.20 | 0.50 | 0.24 | 0.26 | 0.23 | 0.24 |
| Cured storage modulus (G') 10 % strain (MPa) | 1.55 | 1.71 | 1.57 | 1.52 | 1.59 | 1.55 |
| Cured tan delta at 100°C, 10% strain | 0.113 | 0.100 | 0.106 | 0.097 | 0.107 | 0.105 |
| Mooney Scorch, 120°C Scorch time 5 pt rise, min | 54.07 | 14.88 | 39.02 | 30.05 | 36.02 | 24.95 |

| **Stress-strain, ATS, 14 min, 160°C²** | | | | | | |
|---|---|---|---|---|---|---|
| Tensile strength (MPa) | 18.1 | 12.7 | 17.9 | 14 | 15.3 | 16.5 |
| Elongation at break % | 468 | 280 | 410 | 333 | 373 | 380 |
| 100% ring modulus (MPa) | 1.8 | 2.3 | 2 | 2.1 | 2 | 2 |
| 300% ring modulus (MPa) | 11.1 | -- | 13 | 13.8 | 12.8 | 13.3 |

| **Rebound** | | | | | | |
|---|---|---|---|---|---|---|
| 23°C | 35.6 | 28.9 | 36.4 | 33.5 | 36.7 | 33.5 |
| 100°C | 63.9 | 65.5 | 64.7 | 64.7 | 65 | 64.6 |

| **Shore A Hardness** | | | | | | |
|---|---|---|---|---|---|---|
| 23°C | 64 | 69 | 64 | 65 | 64 | 64 |
| 100°C | 59 | 61 | 59 | 59 | 59 | 58 |

| **RDS Strain Sweep, 10 Hz, 30°C³** | | | | | | |
|---|---|---|---|---|---|---|
| Modulus G', at 10% strain (MPa) | 1.92 | 2.21 | 1.78 | 1.72 | 1.71 | 1.57 |
| Tan delta at 10% strain | 0.183 | 0.202 | 0.173 | 0.160 | 0.178 | 0.170 |
| DIN abrasion, 23°C, relative volume loss | 110 | 115 | 95 | 85 | 82 | 78 |
| Grosch abrasion loss rate, 23°C, mg/km | 43.5 | 36.6 | 34.8 | 33.2 | 34.2 | 31.6 |

### A. With Regard to Rubber Processing, Namely Mooney Viscosity and Uncured Elastic Storage Modulus G' for the Uncured Rubber

It can be seen from Table 6 that the Experimental rubber Samples I, J, K and L exhibited just slightly higher, but still very desirable, Mooney viscosity than Comparative rubber Sample A. The processability (Mooney viscosity) of the Comparative rubber Sample A was therefore substantially maintained when the non-blocked silane coupling agent was used to partially replace the blocked silane coupling agent.

It can further be seen from Table 6 that the Experimental rubber Samples I, J, K and L showed just slightly higher, but still very desirable, uncured elastic storage modulus G' at 15% strain than Comparative rubber Sample A. The processability of Comparative rubber Sample A was therefore substantially maintained when the non-blocked silane coupling agent was used to partially replace the blocked silane coupling agent.

### B. With Regard to Hysteresis, in the Sense of Rebound Physical Property, and Tan Delta Property of the Sulfur Cured Rubber Composition:

It can be seen from Table 6 that the hot rebound physical property (100°C) was improved when the unblocked silane coupling agent was used to partially replace the blocked silane coupling agent in Experimental rubber Samples I, J, K and L.

This is considered herein to be significant in the sense that rubber compositions with high hot rebound values at high temperatures (100°) is indicative of low hysteresis of the rubber composition which promotes low internal heat generation and build up and promotes low rolling resistance for a tire having a tread of the rubber composition and thereby promotes better fuel economy for an associated vehicle.

It can further be seen from Table 6 that the Tan delta physical property was improved when the non-blocked silane coupling agent was used to partially replace the blocked silane coupling agent as seen in Experimental rubber samples I, J, K and L.

The reduction in Tan delta value is considered as being beneficial in the sense of reduced hysteresis, thereby indicative of a beneficial impact of a reduction in internal heat generation and build up and promotion of reduction in rolling resistance for a tire having a tread of the rubber composition and thereby promotes better fuel economy for an associated vehicle.

In summary, a rubber composition with a combination of relatively high hot rebound property and low Tan delta property is predictive of low hysteresis for the rubber composition with a resultant relatively lower internal heat generation with a corresponding lower temperature build up during dynamic working of the rubber composition which would promote a predictive beneficially lower rolling resistance for a tire with a tread of such rubber composition with a corresponding increase in fuel economy for an associated vehicle.

### C. With Regard to Abrasion Resistance of the Sulfur Cured Rubber Composition

It can be seen from Table 6 that the DIN and Grosch abrasion resistance property was significantly enhanced when the non-blocked silane coupling agent was used to partially replace the blocked silane coupling agent in Experimental rubber Samples I, J, K and L.

This is considered herein to be significant in the sense of that such increase in abrasion resistance of the rubber composition(s) may predictively reduce tread wear for a tire tread of such rubber composition and thereby promote a longer service life for such tire tread.

In summary, a rubber composition with the beneficial abrasion resistance was achieved without a significant increase in rubber processing difficulties (from Mooney viscosity and minimum torque considerations) of the uncured rubber.

This Example III therefore demonstrates a significant benefit of using a combination of blocked alkoxyorganomercaptosilane coupling agent and unblocked alkoxyorganomercaptosilane coupling agent where the unblocked alkoxyorganmercaptosilane coupling agent is used to replace a portion of the blocked alkoxyorganomercaptosilane coupling agent for a silica reinforcement-containing rubber composition in which various physical properties are improved without significantly compromising processing characteristics (Mooney viscosity and minimum torque) of the rubber composition.

## Claims

1. A rubber composition comprising of, based upon parts by weight per 100 parts by weight rubber (phr):
(A) at least one elastomer comprising:
(1) at least one non-functionalized conjugated diene-based elastomer; and/or
(2) at least one conjugated diene-based elastomer comprising:
(a) from 0 to 55 phr of at least one non-functionalized conjugated diene-based elastomer, and
(b) from 45 to 100 phr of at least one functionalized styrene/butadiene copolymer elastomer comprising at least one of:
(i) styrene/butadiene copolymer elastomer (SBR) having a bound styrene in a range of from 20 to 45 percent containing alkoxy silane groups;
(ii) styrene/butadiene copolymer elastomer having a bound styrene content in a range of from 20 to 45 percent and containing amino-alkoxy silane groups with the amino-alkoxy silane groups connected to the elastomer through the silicon atom;
(iii) styrene/butadiene copolymer elastomer containing an amine functional group;
(iv) styrene/butadiene copolymer elastomer having a bound styrene content in a range of from 20 to 45 percent and containing silane-sulfide end groups with the silane-sulfide groups connected to the elastomer through the silicon atom;
(v) styrene/butadiene copolymer elastomer having hydroxyl functional groups; and
(vi) styrene/butadiene copolymer elastomer having epoxy groups;
(B) 30 to 120 phr of a reinforcing filler comprising:
(1) silica, preferably precipitated silica, which contains hydroxyl groups on its surface, or
(2) a combination of rubber reinforcing carbon black and from 40 to 110 phr of silica, preferably precipitated silica, containing hydroxyl groups on its surface; and
(C) a combination of silica coupling agents comprising:
(1) alkoxyorganomercaptosilane, and
(2) blocked alkoxyorganomercaptosilane,
wherein the ratio of the alkoxyorganomercaptosilane to the blocked alkoxyorganomercaptosilane is in a range of from 0.1/1 to 0.5/1.

2. The rubber composition of claim 1 wherein the elastomer is at least one non-functionalized conjugated diene-based elastomer, and/or wherein the non-functionalized conjugated diene-based elastomer comprises at least one polymer of at least one of isoprene and 1,3-polybutadiene and terpolymer of styrene and at least one of isoprene and 1,3-butadiene.

3. The rubber composition claim 1 or 2 wherein the elastomer is a combination of the non-functionalized conjugated diene-based elastomer and the functionalized elastomer.

4. The rubber composition of at least one of the previous claims wherein the non-functionalized conjugated diene-based elastomer comprises:
(A) cis 1,4-polybutadiene rubber, or
(B) cis 1,4-polybutadiene rubber and cis 1,4-polyisoprene rubber.

5. The rubber composition of at least one of the previous claims wherein the at least one elastomer is a combination of:
(A) 15 to 55 phr of the at least one non-functionalized conjugated diene-based elastomer, and
(B) 45 to 85 phr of the at least one functionalized styrene/butadiene elastomer.

6. The rubber composition of at least one of the previous claims wherein the functionalized styrene/butadiene copolymer elastomer comprises styrene/butadiene copolymer elastomer (SBR) having a bound styrene in a range of from 20 to 45 percent containing alkoxy silane groups reactive with hydroxyl groups contained on the precipitated silica reinforcing filler.

7. The rubber composition of at least one of the previous claims wherein the functionalized styrene/butadiene copolymer elastomer comprises styrene/butadiene copolymer elastomer having a bound styrene content in a range of from 20 to 45 percent and containing amino and alkoxy silane groups, wherein the alkoxy silane groups are reactive with hydroxyl groups contained on the precipitated silica reinforcing filler.

8. The rubber composition of at least one of the previous claims wherein the functionalized styrene/butadiene copolymer elastomer comprises:
(i) a styrene/butadiene copolymer elastomer containing an amine functional group; and/or
(ii) a styrene/butadiene copolymer elastomer containing hydroxyl functional groups; and/or
(iii) a styrene/butadiene copolymer elastomer containing epoxy groups

9. The rubber composition of at least one of the previous claims wherein the functionalized styrene/butadiene copolymer elamstomer comprises a styrene/butadiene copolymer elastomer having a bound styrene content in a range of from 20 to 45 percent and containing silane-sulfide end groups with the silane-sulfide groups connected to the elastomer through the silicon atom.

10. The rubber composition of at least one of the previous claims wherein the blocked alkoxyorganomercaptosilane comprises at least one of 2-triethoxysilyl-1-ethyl thioacetate; 2-trimethoxysilyl-1-ethyl thioacetate; 2-(methyldimethoxysilyl)-1-ethyl thioacetate; 3-trimethoxysilyl-1-propyl thioacetate; triethoxysilylmethyl thioacetate; trimethoxysilylmethyl thioacetate; triisopropoxysilylmethyl thioacetate; methyldiethoxysilylmethyl thioacetate; methyldimethoxysilylmethyl thioacetate; methyldiisopropoxysilylmethyl thioacetate; dimethylethoxysilylmethyl thioacetate; dimethylmethoxysilylmethyl thioacetate; dimethylisopropoxysilylmethyl thioacetate; 2-triisopropoxysilyl-1-ethyl thioacetate; 2-(methyldiethoxysilyl)-1-ethyl thioacetate; 2-(methyldiisopropoxysilyl)-- 1-ethyl thioacetate; 2-(dimethylethoxysilyl)-1-ethyl thioacetate; 2-(dimethylmethoxysilyl)-1-ethyl thioacetate; 2-(dimethylisopropoxysilyl)- -1-ethyl thioacetate; 3-triethoxysilyl-1-propyl thioacetate; 3-triisopropoxysilyl-1-propyl thioacetate; 3-methyldiethoxysilyl-1-propyl thioacetate; 3-methyldimethoxysilyl-1-propyl thioacetate; 3-methyldiisopropoxysilyl-1-propyl thioacetate; 1-(2-triethoxysilyl-1-eth- yl)-4-thioacetylcyclohexane; 1-(2-triethoxysilyl-1-ethyl)-3-thioacetylcycl- ohexane; 2-triethoxysilyl-5-thioacetylnorbornene; 2-triethoxysilyl-4-thioa- cetylnorbornene; 2-(2-triethoxysilyl-1-ethyl)-5-thioacetylnorbornene; 2-(2-triethoxysilyl-1-ethyl)-4-thioacetylnorbornene; 1-(1-oxo-2-thia-5-triethoxysilylpenyl)benzoic acid; 6-triethoxysilyl-1-hexyl thioacetate; 1-triethoxysilyl-5-hexyl thioacetate; 8-triethoxysilyl-1-octyl thioacetate; 1-triethoxysilyl-7-octyl thioacetate; 6-triethoxysilyl-1-hexyl thioacetate; 1-triethoxysilyl-5-octyl thioacetate; 8-trimethoxysilyl-1-octyl thioacetate; 1-trimethoxysilyl-7-octyl thioacetate; 10-triethoxysilyl-1-decyl thioacetate; 1-triethoxysilyl-9-decyl thioacetate; 1-triethoxysilyl-2-butyl thioacetate; 1-triethoxysilyl-3-butyl thioacetate; 1-triethoxysilyl-3-methyl-2-butyl thioacetate; 1-triethoxysilyl-3-methyl-- 3-butyl thioacetate; 3-trimethoxysilyl-1-propyl thiooctoate; 3-triethoxysilyl-1-propyl thiopalmitate; 3-triethoxysilyl-1-propyl thiooctoate; 3-triethoxysilyl-1-propyl thiobenzoate; 3-triethoxysilyl-1-propyl thio-2-ethylhexanoate; 3-methyldiacetoxysilyl-1- -propyl thioacetate; 3-triacetoxysilyl-1-propyl thioacetate; 2-methyldiacetoxysilyl-1-ethyl thioacetate; 2-triacetoxysilyl-1-ethyl thioacetate; 1-methyldiacetoxysilyl-1-ethyl thioacetate; 1-triacetoxysilyl-1-ethyl thioacetate; 3-ethoxydidodecyloxy-1-propyl thioacetate; 3-ethoxyditetradecyloxy-1-propyl thioacetate; 3-ethoxydidodecyloxy-1-propyl-thiooctoate; 3-ethoxyditetradecyloxy-1-prop- yl-thiooctoate; tris-(3-triethoxysilyl-1-propyl)trithiophosphate; bis-(3-triethoxysilyl-1-propyl)methyldithiophosphonate; bis-(3-triethoxysilyl-1-propyl)ethyldithiophosphonate; 3-triethoxysilyl-1-propyldimethylthiophosphinate; 3-triethoxysilyl-1-prop- yldiethylthiophosphinate; tris-(3-triethoxysilyl-1-propyl)tetrathiophospha- te; bis-(3-triethoxysilyl-1-propyl)methyltrithiophosphonate; bis-(3-triethoxysilyl-1-propyl)ethyltrithiophosphonate; 3-triethoxysilyl-1-propyldimethyldithiophosphinate; 3-triethoxysilyl-1-propyldiethyldithiophosphinate; tris-(3-methyldimethoxysilyl-1-propyl)trithiophosphate; bis-(3-methyldimethoxysilyl-1-propyl)methyldithiophosphonate; bis-(3-methyldimethoxysilyl-1-propyl)ethyldithiophosphonate; 3-methyldimethoxysilyl-1-propyldimethylthiophosphinate; 3-methyldimethoxysilyl-1-propyldiethylthiophosphinate; 3-triethoxysilyl-1-propylmethylthiosulphate; 3-triethoxysilyl-1-propylmethanethiosulphonate; 3-triethoxysilyl-1-propylethanethiosulphonate; 3-triethoxysilyl-1-propylbenzenethiosulphonate; 3-triethoxysilyl-1-propyltoluenethiosulphonate; 3-triethoxysilyl-1-propylnaphthalenethiosulphonate; 3-triethoxysilyl-1-propylxylenethiosulphonate; triethoxysilylmethylmethyl- thiosulphate; triethoxysilylmethylmethanethiosulphonate; triethoxysilylmethylethanethiosulphonate; triethoxysilylmethylbenzenethio- sulphonate; triethoxysilylmethyltoluenethiosulphonate; triethoxysilylmethylnaphthalenethiosulphonate; triethoxysilylmethylxylene- thiosulphonate and 3-octanothio-1-propyltriethoxysilane.

11. The rubber composition of at least one of the previous claims wherein the alkoxyorganomercaptosilane comprises at least one of triethoxymercaptopropylsilane, trimethoxymercaptopropylsilane, methyldimethoxy mercaptopropylsilane, methyldiethoxymercaptopropyl silane, dimethylmethoxy mercaptopropylsilane, triethoxymercaptoethylsilane, and tripropoxymercaptopropyl silane and oligomeric organomercaptosilane comprising a reaction product of 2-methyl-1,3-propane and S-[3-(triethoxysilyl)propyl] thiooctanol or with S-[3-trichlorosilyl)propyl] thiooctanoate.

12. A tire having at least one component comprising a rubber composition of at least one of the previous claims.

13. The tire of claim 12 wherein the component is a tread.

14. A method of preparing a rubber composition, the method comprising:
(I) mixing at a mixing temperature in a range of from 140°C to 180°C, based on parts by weight per 100 parts by weight of diene-based elastomer (phr):
(A) at least one elastomer comprising:
(1) at least one non-functionalized conjugated diene-based elastomer, or
(2) at least one conjugated diene-based elastomer comprising:
(a) from 0 to 55 phr of at least one non-functionalized conjugated diene-based elastomer, and
(b) 45 to 100 phr of at least one functionalized styrene/butadiene copolymer elastomer comprising at least one of:
(i) styrene/butadiene copolymer elastomers (SBR) having a bound styrene in a range of from 20 to 45 percent containing alkoxy silane groups;
(ii) styrene/butadiene copolymer elastomer having a bound styrene content in a range of from 20 to 45 percent and containing amino-alkoxy silane groups with the amino-alkoxy silane groups connected to the elastomer through the silicon atom;
(iii) styrene/butadiene copolymer elastomer containing an amine functional group;
(iv) styrene/butadiene copolymer elastomer having a bound styrene content in a range of from 20 to 45 percent and containing silane-sulfide end groups with the silane-sulfide groups connected to the elastomer through the silicon atom;
(v) styrene/butadiene copolymer elastomer having hydroxyl functional groups; and
(vi) styrene/butadiene copolymer elastomer having epoxy groups;
(B) 30 to 120 phr of reinforcing filler wherein the reinforcing filler comprises a combination of rubber reinforcing carbon black and from 40 to 110 phr of silica, preferably precipitated silica, which contains hydroxyl groups on its surface; and
(C) a silica coupler comprising:
(1) a alkoxyorganomercaptosilane, and
(2) a blocked siloxyorganomercaptosilane having its mercapto moiety reversibly blocked;
(II) mixing an unblocking agent with the resulting rubber mixture, and concurrently or thereafter mixing sulfur curative therewith; and
(III) curing the resulting mixture at an elevated temperature.

15. The method of claim 14 wherein the ratio of the alkoxyorganomercaptosilane to the blocked alkoxyorganomercaptosilane is in a range of from 0.1/1 to 0.5/1.
